# EUROPÄISCHE PATENTANMELDUNG

(11) **EP 4 141 341 A1**
(43) Veröffentlichungstag der Anmeldung: **01.03.2023**
(21) Anmeldenummer: 21192825.4
(22) Anmeldetag: 24.08.2021
(51) Int. Cl.: F24H 4/02, F24H 9/00, B01D 46/00, F28F 19/01, F24F 8/108, F24F 13/28, F24D 17/02, F28F 1/00

(54) **WÄRMEPUMPENANORDNUNG**

(71) Anmelder: R. Nussbaum AG, 4600 Olten 1 (CH)
(72) Erfinder: PAVLOVIC, Andrin, 8006 Zürich (CH); ETTERLIN, Matthias, 8910 Affolten a.A. (CH); Billeter Lukas, 4800 Zofingen (CH); ZEITER Patrik, 4853 Riken (CH); BOBST Urs, 4703 Kestenholz (CH)
(74) Vertreter: Keller Schneider Patent- und Markenanwälte AG

(57) **Zusammenfassung**

Die Erfindung betrifft eine Wärmepumpenanordnung (50) für eine Vorrichtung (41) zur Bereitstellung von Brauchwarmwasser. Diese Wärmepumpenanordnung (50) beinhaltet eine Wärmepumpe (52) zum Erwärmen von Wasser, insbesondere Trinkwasser, auf eine Warmwassertemperatur und damit zur Erzeugung des Brauchwarmwassers, wobei die Wärmepumpe (52) einen Verdampfer (57) zur Nutzung von Luft als Wärmequelle zum Verdampfen eines Kältemittels umfasst. Dabei ist die Wärmepumpenanordnung (50) zum Bilden einer Luftführung im montierten Zustand der Wärmepumpenanordnung (50) ausgebildet, welche Luftführung einen Lufteinlass (56) und einen Luftauslass (59) aufweist, wobei mittels der Luftführung ein Strom von Luft vom Lufteinlass (56) zum Verdampfer (57) zur Nutzung als Wärmequelle und anschliessend vom Verdampfer (57) zum Luftauslass (59) führbar ist. Weitere beinhaltet die Wärmepumpenanordnung (50) einen Luftfilterhalter zum Halten eines Luftfilterelements (14) mit einer Luftfilterdurchflussquerschnittsfläche in der Luftführung zum Filtern der mit dem Strom von Luft durch die Luftführung vom Lufteinlass (56) zum Verdampfer (57) geführten Luft, wobei der Strom von Luft über eine gesamte Lufteinlassquerschnittsfläche des Lufteinlasses (56) verteilt durch den Lufteinlass (56) in die Luftführung fliessen kann und wobei der Strom von Luft über die gesamte Luftfilterdurchflussquerschnittsfläche verteilt durch das Luftfilterelement (14) zum Filtern der mit dem Strom von Luft durch die Luftführung vom Lufteinlass (56) zum Verdampfer (57) geführten Luft fliessen kann, wobei die Luftfilterdurchflussquerschnittsfläche mindestens 3 mal so gross wie die Lufteinlassquerschnittsfläche ist.

## Beschreibung

### Technisches Gebiet

Die Erfindung betrifft eine Wärmepumpenanordnung für eine Vorrichtung zur Bereitstellung von Brauchwarmwasser.

### Stand der Technik

Wärmepumpenanordnungen für Vorrichtungen zur Bereitstellung von Brauchwarmwasser sind bekannt. Eine solche Wärmepumpenanordnung ist beispielsweise in der EP 3 696 475 A1 der R. Nussbaum AG beschrieben. Diese Wärmepumpenanordnung ist Bestandteil einer Vorrichtung zur Bereitstellung von Brauchwarmwasser.

Werden Wärmepumpenanordnungen bzw. Vorrichtungen zur Bereitstellung von Brauchwarmwasser (Boilern) innerhalb von Wohneinheiten installiert, sind unter anderem die Ästhetik und die Minimierung der Betriebsgeräusche besonders wichtig. Gleichzeitig sollen die Einrichtungen langfristig eine hohe Effizienz aufweisen.

Der Einbausituation kommt deshalb eine grosse Bedeutung zu.

### Darstellung der Erfindung

Aufgabe der Erfindung ist es, eine dem eingangs genannten technischen Gebiet zugehörende Wärmepumpenanordnung für eine Vorrichtung zur Bereitstellung von Brauchwarmwasser zu schaffen, welche flexibel für verschiedene Einbausituationen geeignet ist, und langfristig eine hohe Effizienz und eine geringe Geräuschentwicklung aufweist.

Die Lösung der Aufgabe ist durch die Merkmale des Anspruchs 1 definiert. Gemäss der Erfindung beinhaltet die Wärmepumpenanordnung eine Wärmepumpe zum Erwärmen von Wasser, insbesondere Trinkwasser, auf eine Warmwassertemperatur und damit zur Erzeugung des Brauchwarmwassers, wobei die Wärmepumpe einen Verdampfer zur Nutzung von Luft als Wärmequelle zum Verdampfen eines Kältemittels umfasst. Weiter ist die Wärmepumpenanordnung zum Bilden einer Luftführung im montierten Zustand der Wärmepumpenanordnung ausgebildet, welche Luftführung einen Lufteinlass und einen Luftauslass aufweist, wobei mittels der Luftführung ein Strom von Luft vom Lufteinlass zum Verdampfer zur Nutzung als Wärmequelle und anschliessend vom Verdampfer zum Luftauslass führbar ist. Zudem beinhaltet die Wärmepumpenanordnung einen Luftfilterhalter zum Halten eines Luftfilterelements mit einer Luftfilterdurchflussquerschnittsfläche in der Luftführung zum Filtern der mit dem Strom von Luft durch die Luftführung vom Lufteinlass zum Verdampfer geführten Luft, wobei der Strom von Luft über eine gesamte Lufteinlassquerschnittsfläche des Lufteinlasses verteilt durch den Lufteinlass in die Luftführung fliessen kann und wobei der Strom von Luft über die gesamte Luftfilterdurchflussquerschnittsfläche verteilt durch das Luftfilterelement zum Filtern der mit dem Strom von Luft durch die Luftführung vom Lufteinlass zum Verdampfer geführten Luft fliessen kann, wobei die Luftfilterdurchflussquerschnittsfläche mindestens 1.75 mal so gross wie die Lufteinlassquerschnittsfläche ist.

Wie erwähnt, beinhaltet die Wärmepumpenanordnung erfindungsgemäss eine Wärmepumpe zum Erwärmen von Wasser, insbesondere Trinkwasser, auf eine Warmwassertemperatur und damit zur Erzeugung des Brauchwarmwassers. Vorzugsweise umfasst die Wärmepumpe nebst dem Verdampfer zum Verdampfen des Kältemittels einen Kondensator zum Kondensieren des Kältemittels und einen Verdichter zum Verdichten des Kältemittels, insbesondere einen Kompressor zum Komprimieren des Kältemittels. Vorzugsweise ist durch den Kondensator das Wasser, insbesondere das Trinkwasser, auf die Warmwassertemperatur erwärmbar, um das Brauchwarmwasser bereitzustellen. Die Wärmepumpenanordnung kann ohne das Kältemittel transportiert und vertrieben werden. Daher ist nicht erforderlich, dass die Wärmepumpe das Kältemittel umfasst. Entsprechend besteht die Möglichkeit, dass die Wärmepumpenanordnung das Kältemittel nicht umfasst. Für den Betrieb umfasst die Wärmepumpe das Kältemittel jedoch. Somit umfasst in einer bevorzugten Variante die Wärmepumpenanordnung, insbesondere die Wärmepumpe, das Kältemittel. In einer Variante dazu umfasst die Wärmepumpenanordnung hingegen das Kältemittel nicht.

Bevorzugt ist das Brauchwarmwasser Wasser mit einer Temperatur in einem Bereich von 45°C bis 75°C, besonders bevorzugt in einem Bereich von 50°C bis 65°C, ganz besonders bevorzugt in einem Bereich von 55°C bis 60°C. Besonders bevorzugt ist das Brauchwarmwasser Trinkwasser mit einer Temperatur in einem Bereich von 45°C bis 75°C, besonders bevorzugt in einem Bereich von 50°C bis 65°C, ganz besonders bevorzugt in einem Bereich von 55°C bis 60°C. Somit umfasst das Bereitstellen von Brauchwarmwasser bevorzugt ein Erwärmen von Wasser, insbesondere Trinkwasser, auf eine Temperatur im Bereich von 45°C bis 75°C, insbesondere im Bereich von 50°C bis 65°C bzw. im Bereich von 55°C bis 60°C, sowie das Bereithalten des Wassers bzw. Trinkwassers bei einer Temperatur im Bereich von 45°C bis 75°C, insbesondere im Bereich von 50°C bis 65°C bzw. im Bereich von 55°C bis 60°C. Dabei bedeutet Bereithalten bevorzugt ein ständiges Bereithaben zur unmittelbaren Benutzung bei Bedarf. Somit liegt die Warmwassertemperatur, auf welche das Wasser bzw. Trinkwasser erwärmt wird, bevorzugt im Bereich von 45°C bis 75°C bzw. im Bereich von 50°C bis 65°C bzw. im Bereich von 55°C bis 60°C. Dabei ist nicht erforderlich, dass das Brauchwarmwasser auch bei der Warmwassertemperatur, auf welche das Brauchwarmwasser zu seiner Bereitstellung erwärmt wird, bereitgehalten wird. Die genannten Temperaturbereiche entsprechen gängigen Normen, z. B. der Richtlinie W3/E3:2020 für die Hygiene in Trinkwasserinstallationen des Schweizerischen Vereins des Gas- und Wasserfaches (SVGW) oder der Norm SIA 385/1:2020 des Schweizerischen Ingenieur- und Architektenvereins SIA. Dabei ist zu beachten, dass die erfindungsgemässe Wärmepumpenanordnung insbesondere direkt auf der Etage, also in unmittelbarer Nachbarschaft der Entnahmestellen, zum Einsatz kommt, wodurch die Temperaturen jeweils im Bereich der unteren Grenzen der Vorgaben gewählt werden können. Ein periodisches, z. B. wöchentliches, Aufheizen des Warmwassers auf eine höhere Temperatur ("Legionellen-Schaltung") ist gemäss neusten Erkenntnissen im Hinblick auf die zu vermeidende Vermehrung der Legionellen (Keime, die die Legionärskrankheit auslösen können) unnötig, möglicherweise sogar nachteilig, und wird nicht mehr empfohlen (Norm SIA 385/1:2020, Anhang B).

In einer bevorzugten Variante beinhaltet die Vorrichtung zur Bereitstellung von Brauchwarmwasser einen Warmwasserspeicher zum Speichern des Brauchwarmwassers. Dabei ist der Begriff "Warmwasserspeicher" bevorzugt breiter als gemäss der Norm SIA 385/1:2020 zu verstehen und umfasst bevorzugt sowohl Wasserspeicher mit eingebauten Heizflächen als auch Wasserspeicher ohne eingebaute Heizflächen. Entsprechend ist der Begriff "Warmwasserspeicher" im vorliegenden Text derart zu verstehen, dass er sowohl Speicherwassererwärmer gemäss der Norm SIA 385/1:2020als auch Warmwasserspeicher gemäss der Norm SIA 385/1:2020 umfasst. Da in der vorgenannten bevorzugten Variante das Brauchwarmwasser im Warmwasserspeicher gespeichert wird, kann das Brauchwarmwasser auch bei einer Entnahmetemperatur dem Warmwasserspeicher entnehmbar sein, welche etwas tiefer als die Warmwassertemperatur ist. Dies kann beispielsweise der Fall sein, wenn im Warmwasserspeicher eine inhomogene Temperaturverteilung vorliegt. Dies kann aber beispielsweise auch aufgrund von Wärmeverlusten im Warmwasserspeicher der Fall sein. Bevorzugt liegt die Entnahmetemperatur jedoch ebenfalls im Bereich von 45°C bis 75°C, insbesondere im Bereich von 50°C bis 65°C. Besonders bevorzugt erfüllt die Vorrichtung dabei die Norm SIA 385/1:2020. Das bedeutet, dass die Entnahmetemperatur am Eintritt der Ausstossleitung je nach Verwendung der Vorrichtung bevorzugt im Bereich von 50°C bis 65°C oder von 55°C bis 60°C liegt.

In der bevorzugten Variante, in welcher die Vorrichtung zur Bereitstellung von Brauchwarmwasser einen Warmwasserspeicher zum Speichern des Brauchwarmwassers beinhaltet, umfasst die Wärmepumpe bevorzugt den vorgenannten Kondensator, wobei durch den Kondensator bevorzugt Wasser, insbesondere Trinkwasser, im Warmwasserspeicher auf die Warmwassertemperatur erwärmbar ist, um das Brauchwarmwasser bereitzustellen. In einer Variante dazu besteht aber auch die Möglichkeit, dass die Wärmepumpe den vorgenannten Kondensator umfasst, wobei durch den Kondensator Wasser, insbesondere Trinkwasser, ausserhalb des Warmwasserspeichers auf die Warmwassertemperatur erwärmbar und anschliessend im Warmwasserspeicher speicherbar ist, um das Brauchwarmwasser bereitzustellen.

Alternativ zu diesen Varianten besteht aber auch die Möglichkeit, dass die Vorrichtung zur Bereitstellung von Brauchwarmwasser keinen Warmwasserspeicher zum Speichern des Brauchwarmwassers beinhaltet.

Wie erwähnt, ist erfindungsgemäss die Wärmepumpenanordnung zum Bilden einer Luftführung im montierten Zustand der Wärmepumpenanordnung ausgebildet, welche Luftführung einen Lufteinlass und einen Luftauslass aufweist, wobei mittels der Luftführung ein Strom von Luft vom Lufteinlass zum Verdampfer zur Nutzung als Wärmequelle und anschliessend vom Verdampfer zum Luftauslass führbar ist. In einer vorteilhaften Variante ist die Wärmepumpenanordnung zum Bilden einer Luftführung im montierten Zustand der Wärmepumpenanordnung ausgebildet, indem die Wärmepumpenanordnung derart ausgebildet ist, dass die Wärmepumpenanordnung im montierten Zustand eine Luftführung beinhaltet.

Die Luftführung kann beispielsweise durch ein Gehäuse der Wärmepumpenanordnung gebildet sein, welche einen Lufteinlass und einen Luftauslass aufweist, wobei mittels der Luftführung der Strom von Luft vom Lufteinlass zum Verdampfer zur Nutzung als Wärmequelle und anschliessend vom Verdampfer zum Luftauslass führbar ist. Die Luftführung kann aber auch ganz oder teilweise durch einen Luftführungskanal gebildet sein. Beispielsweise kann die Luftführung in einem ersten Abschnitt vom Lufteinlass bis zum Luftfilterhalter und in einem zweiten Abschnitt vom Luftfilterhalter zum Verdampfer durch einen Luftführungskanal gebildet sein und in einem dritten Abschnitt vom Verdampfer zum Luftauslass durch das Gehäuse der Wärmepumpenanordnung gebildet sein. Dabei besteht beispielsweise die Möglichkeit, dass die Luftführung im dritten Abschnitt nicht kanalartig geformt ist, sondern dass die Luftführung alleine durch eine Abschirmung durch das Gehäuse zu einem Raum ausserhalb des Gehäuses erfolgt, wobei die Luft des Stroms von Luft durch den Luftauslass aus dem Gehäuse austreten kann.

Unabhängig davon kann der Lufteinlass durch Öffnung in einem Gehäuse der Vorrichtung zur Bereitstellung von Brauchwarmwasser oder durch eine Öffnung in einem Gehäuse der Wärmepumpenanordnung gebildet sein. Der Lufteinlass kann aber auch durch einen im montierten Zustand der Vorrichtung bzw. der Wärmepumpenanordnung vorhandenen Abstand des Gehäuses der Vorrichtung bzw. der Wärmepumpenanordnung vom Boden bzw. durch Lücke zwischen Boden und Gehäuse gebildet sein. In diesem Fall weist das Gehäuse bevorzugt eine Öffnung auf, welche mindestens gleich gross wie der durch die Lücke zwischen dem Boden und dem Gehäuse gebildete Lufteinlass ist. Falls die Öffnung im Gehäuse kleiner als die Lücke zwischen dem Boden und dem Gehäuse ist, so ist hingegen vorzugsweise die Öffnung im Gehäuse der Lufteinlass.

Erfindungsgemäss beinhaltet die Wärmepumpenanordnung einen Luftfilterhalter zum Halten eines Luftfilterelements mit einer Luftfilterdurchflussquerschnittsfläche in der Luftführung zum Filtern der mit dem Strom von Luft durch die Luftführung vom Lufteinlass zum Verdampfer geführten Luft. D.h., die Wärmepumpenanordnung ist vorteilhafterweise derart konstruiert, dass der Luftfilterhalter das Halten eines Luftfilterelements ermöglicht, sodass das Filterelement in der Luftführung für den Strom von Luft die Luftfilterdurchflussquerschnittsfläche aufweist und die Luft des Stroms von Luft zum Filtern durch das Filterelement bewegt wird, wenn mittels der Luftführung der Strom von Luft vom Lufteinlass zum Verdampfer zur Nutzung als Wärmequelle geführt wird. Hierzu weist das Luftfilterelement bevorzugt zumindest in einer Ausrichtung eine Filterelementquerschnittsfläche auf, welche mindestens gleich gross wie die Luftfilterdurchflussquerschnittsfläche ist. Dies ermöglicht, dass das Luftfilterelement derart in der Luftführung angeordnet werden kann, dass das Luftfilterelement für den Strom von Luft die Luftfilterdurchflussquerschnittsfläche aufweist. Das Luftfilterelement kann beispielsweise ein plissierter Zellenfilter mit einem Kartonrahmen sein, welcher nach der Norm ISO 16890 vom Dezember 20216 der Filtergruppe ISO coarse zugehört, einen Anfangsabscheidegrad von 60% aufweist und eine Dicke von 94 mm aufweist. Die Schweizer Firma Tecnofil AG vertreibt beispielsweise einen derartigen Filter unter der Bezeichnung ZFP-KA-4 coarse 60% 94 mm. Das Luftfilterelement kann aber auch anders ausgebildet sein.

Dass die Wärmepumpenanordnung einen Luftfilterhalter zum Halten eines Luftfilterelements mit einer Luftfilterdurchflussquerschnittsfläche in der Luftführung zum Filtern der mit dem Strom von Luft durch die Luftführung vom Lufteinlass zum Verdampfer geführten Luft beinhaltet, hat den Vorteil, dass die Luft, welche im Betrieb der Wärmepumpenanordnung dem Verdampfer zur Nutzung von Luft als Wärmequelle zum Verdampfen durch die Luftführung zugeführt wird, durch das Luftfilterelement gefiltert werden kann, bevor sie den Verdampfer erreicht. Dadurch wird der Verdampfer im Betrieb der Wärmepumpenanordnung weniger verschmutzt, namentlich durch Staub, womit einerseits eine aufwändige Reinigung der Wärmepumpenanordnung entfällt oder zumindest deutlich weniger oft durchgeführt werden muss und andererseits die Effizienz, mit welcher mit dem der Verdampfer Wärme der Luft entzogen werden kann, länger optimal hoch bleibt, da sie nicht durch eine Verschmutzung des Verdampfers reduziert wird. Dadurch bleibt auch die Effizienz der Vorrichtung zur Bereitstellung von Brauchwarmwasser länger optimal hoch. Durch das Absetzen von Staub im Bereich des Verdampfers kann sich zudem eine Brand- oder gar Explosionsgefahr ergeben. Auch diese wird mit Hilfe des Luftfilterelements minimiert.

Das Luftfilterelement kann bei geeigneter Auslegung weitere Funktionen wahrnehmen. So kann es zum Herausfiltern von Pollen oder Keimen (Bakterien, Viren, Algen, Pilze usw.) dienen, zur Neutralisation von Gerüchen (z. B. mit Hilfe eines Aktivkohleelements) o. ä. Auch eine Befeuchtungseinrichtung lässt sich integrieren.

Dient das Luftfilterelement primär zum Zurückhalten von Staub, wird mit Vorteil ein Gitterelement, z. B. aus Metall, verwendet, das nur einen geringen Druckverlust zur Folge hat. Auch andere Luftfilterelemente sind einsetzbar, z. B. aus Filtergeweben.

Die Luftfilterdurchflussquerschnittsfläche ist bevorzugt mindestens 350cm² gross, besonders bevorzugt mindestens 400 cm² gross. Alternativ dazu besteht aber auch die Möglichkeit, dass die Luftfilterdurchflussquerschnittsfläche kleiner als 350 cm² gross ist.

Erfindungsgemäss kann der Strom von Luft über eine gesamte Lufteinlassquerschnittsfläche des Lufteinlasses verteilt durch den Lufteinlass in die Luftführung fliessen. Dabei ist in einer bevorzugten Variante der Lufteinlassquerschnittsfläche etwa 200 cm² gross. In einer bevorzugten Variante hingegen ist der Lufteinlassquerschnittsfläche grösser als etwa 200 cm² gross. In einer weiteren Variante besteht auch die Möglichkeit, dass der Lufteinlassquerschnittsfläche kleiner als etwa 200 cm² gross ist.

Erfindungsgemäss kann der Strom von Luft über die gesamte Luftfilterdurchflussquerschnittsfläche verteilt durch das Luftfilterelement zum Filtern der mit dem Strom von Luft durch die Luftführung vom Lufteinlass zum Verdampfer geführten Luft fliessen, wobei die Luftfilterdurchflussquerschnittsfläche mindestens 1.75 mal so gross wie die Lufteinlassquerschnittsfläche ist.

Die Luftfilterdurchflussquerschnittsfläche und die Lufteinlassquerschnittsfläche bezeichnen jeweils den freien Durchlass im Bereich unmittelbar vor dem Luftfilterelement bzw. unmittelbar am Lufteinlass. Ist vor dem Luftfilterelement bzw. am Lufteinlass ein Element, z. B. ein Gitter, angeordnet, das den freien Durchtritt von Luft behindert, ergibt sich der freie Durchlass bei einem flächigen, im Wesentlichen 2-dimensionalen Element aus der Gesamtfläche, die nicht vom Element bedeckt ist, also z. B. aus der Gesamtlochfläche. Bei einem Element, das sich in die dritte Dimension erstreckt und bei dem die Durchlässe nicht einfach prismatische Kanäle senkrecht zur Front- und Rückfläche sind, z. B. einem Lamellengitter, muss die Reduktion des Luftdurchlasses aufgrund der dreidimensionalen Geometrie berücksichtigt werden. Dazu wird insbesondere die Gesamtlochfläche auf der Eintrittsseite mit einem Faktor ≤ 1 multipliziert, der sich aus dem Verhältnis zwischen der kleinsten Durchlassoberfläche zur Einlassfläche ergibt. Die kleinste Durchlassoberfläche wird dabei jeweils senkrecht zur Flussrichtung des Luftstroms gemessen.

Das erfindungsgemässe Verhältnis zwischen der Luftfilterdurchflussquerschnittsfläche und der Lufteinlassquerschnittsfläche hat den Vorteil, dass sich die Luft des Stroms von Luft mit einer geringeren Geschwindigkeit durch das Luftfilterelement bewegen kann als durch den Lufteinlass. Dadurch ist der Widerstand beim Durchfliessen des Luftfilterelements vergleichsweise reduziert, weshalb weniger Leistung benötigt wird, um die Luft des Stroms von Luft durch das Luftfilterelement zum Filtern der mit dem Strom von Luft durch die Luftführung vom Lufteinlass zum Verdampfer geführten Luft zu bewegen. Wenn der Antrieb des Stroms von Luft durch die Luftführung mittels Konvektion erfolgt, so wird dadurch ein vergleichsweise stärkerer Strom von Luft ermöglicht. Wenn der Strom von Luft durch die Luftführung hingegen mittels eines Ventilators angetrieben wird, so ermöglicht dies die Nutzung eines kleineren und leiseren Ventilators. Entsprechend kann die erfindungsgemässe Wärmepumpenanordnung dadurch bei einer gleichen Leistung für die Bereitstellung von Brauchwarmwasser leiser konstruiert werden. Entsprechend weist die erfindungsgemässe Wärmepumpenanordnung dadurch den Vorteil auf, dass sie derart konstruiert werden kann, dass sie bei einem Einsatz in einem Wohnraum für die Bewohner des Wohnraums kein oder zumindest kaum störende Hintergrundgeräusche verursacht. Je grösser dabei die Luftfilterdurchflussquerschnittsfläche im Vergleich zur Lufteinlassquerschnittsfläche ist, desto stärker werden diese Vorteile. Daher ist die Luftfilterdurchflussquerschnittsfläche bevorzugt mindestens 2 mal, besonders bevorzugt mindestens 2.5mal, so gross wie die Lufteinlassquerschnittsfläche.

Indem die Luftfilterdurchflussquerschnittsfläche mindestens 1.75 mal, bevorzugt mindestens 2 mal, besonders bevorzugt mindestens 2.5 mal so gross wie die Lufteinlassquerschnittsfläche ist, wird ausserdem der Vorteil erreicht, dass die erfindungsgemässe Wärmepumpenanordnung sowie auch eine Vorrichtung zur Erzeugung von Brauchwarmwasser mit einer erfindungsgemässen Wärmepumpenanordnung bei der Sanierung von bestehenden Wohnräumen eingesetzt werden kann. In solchen Fällen kann es vorkommen, dass bereits ein Schrank oder sonstiger Aufnahmeraum mit einer vorgegebenen Grösse für die Aufnahme einer Vorrichtung zur Bereitstellung von Brauchwarmwasser besteht. Solche bestehenden Schränke weisen - entsprechend den Standards für Kühlschränke und andere Haushaltsgeräte - oft eine Sockelleiste mit einer Öffnung mit einem freien Durchlass von etwa 200 cm² auf, durch welche Luft von ausserhalb des Schranks bzw. des Aufnahmeraums in den Schrank bzw. Aufnahmeraum geführt werden kann. Die erfindungsgemässe Wärmepumpenanordnung ist für den Einbau in derartige Schränke bzw. Aufnahmeräume besonders geeignet, da sie trotz des relativ kleinen vorgegebenen Lufteinlasses die Anordnung eines Filters bei geringem Druckverlust ermöglicht. Der Filter wiederum verhindert Effizienzeinbussen am Wärmetauscher und führt zu einer höheren Lebensdauer bzw. geringeren Störungsanfälligkeit. Zudem wird die Geräuschabgabe in den Wohnraum reduziert.

Vorzugsweise weist die Luftführung auf ihrem gesamten Weg vom Lufteinlass zum Luftfilterhalter einen Luftführungsquerschnitt mit einer Luftführungsquerschnittsfläche auf, welche Luftführungsquerschnittsfläche mindestens so gross wie die Lufteinlassquerschnittsfläche ist. Dies hat den Vorteil, dass der Strom von Luft sehr effizient durch die Luftführung geleitet werden kann.

Bevorzugt weist die Luftführung auf ihrem gesamten Weg vom Lufteinlass zum Luftfilterhalter keine Verengung auf, d.h. bevorzugt steigt ein Wert der Luftführungsquerschnittsfläche auf dem gesamten Weg der Luftführung vom Lufteinlass zum Luftfilterhalter monoton. Dies hat den Vorteil, dass der Strom von Luft noch effizienter durch die Luftführung geleitet werden kann. Alternativ dazu besteht aber auch die Möglichkeit, dass die Luftführung auf ihrem Weg vom Lufteinlass zum Luftfilterhalter eine oder mehrere Verengungen aufweist.

In einer bevorzugten Variante davon ist dabei die Luftführungsquerschnittsfläche über eine Länge von wenigstens 80% des Wegs vom Lufteinlass zum Luftfilterhalter um mindestens 10% grösser als die Lufteinlassquerschnittsfläche. Es besteht aber auch die Möglichkeit, dass die Luftführungsquerschnittsfläche nicht über eine Länge von wenigstens 80% des Wegs vom Lufteinlass zum Luftfilterhalter um mindestens 10% grösser als die Lufteinlassquerschnittsfläche ist. Dies hat den Vorteil, dass der Strom von Luft auch bei einer vergleichsweise kleinen Lufteinlassquerschnittsfläche sehr effizient durch die Luftführung geleitet werden kann.

Alternativ zu diesen Varianten besteht aber auch die Möglichkeit, dass die Luftführung nicht auf ihrem gesamten Weg vom Lufteinlass zum Luftfilterhalter einen Luftführungsquerschnitt aufweist, dessen Luftführungsquerschnittsfläche mindestens so gross wie die Lufteinlassquerschnittsfläche ist.

Vorteilhafterweise umfasst die Wärmepumpenanordnung einen Ventilator zum Antreiben des Stroms von Luft in der Luftführung vom Lufteinlass zum Verdampfer und damit zum Zuführen von Luft als Wärmequelle zum Verdampfer. Dies hat den Vorteil, dass der Strom von Luft in der Luftführung vom Lufteinlass zum Verdampfer und damit zum Zuführen von Luft als Wärmequelle zum Verdampfer auf einfache und effiziente Art und Weise angetrieben werden kann.

Alternativ dazu besteht aber auch die Möglichkeit, dass die Wärmepumpenanordnung keinen Ventilator zum Antreiben des Stroms von Luft in der Luftführung vom Lufteinlass zum Verdampfer und damit zum Zuführen von Luft als Wärmequelle zum Verdampfer umfasst.

Vorzugsweise ist der Luftfilterhalter zum Halten des Luftfilterelements derart ausgebildet, dass das Luftfilterelement austauschbar ist. Dies hat den Vorteil, dass der Unterhalt der Wärmepumpenanordnung vereinfacht wird und kostengünstiger durchgeführt werden kann. Alternativ dazu besteht aber auch die Möglichkeit, dass der Luftfilterhalter zum Halten des Luftfilterelements nicht derart ausgebildet ist, dass das Luftfilterelement austauschbar ist. Insbesondere kann der Luftfilterhalter zum Halten des Luftfilterelements dabei derart ausgebildet sein, dass das Luftfilterelement nicht austauschbar ist.

Vorteilhafterweise weist die Wärmepumpenanordnung eine Tragstruktur auf. Besonders bevorzugt handelt es sich dabei um eine Tragstruktur zum Tragen der Komponenten der Wärmepumpenanordnung. Dies hat den Vorteil, dass die Wärmepumpenanordnung stabil und auf einfache Art und Weise montierbar konstruiert werden kann.

Alternativ dazu besteht aber auch die Möglichkeit, dass die Wärmepumpenanordnung keine Tragstruktur aufweist.

Vorzugsweise ist der Luftfilterhalter bewegbar an der restlichen Wärmepumpenanordnung gelagert, wobei der Luftfilterhalter eine Betriebsstellung aufweist, in welcher sich der Luftfilterhalter in einer Position befindet, in welcher das gegebenenfalls im Luftfilterhalter gehaltene Luftfilterelement zum Filtern der mit dem Strom von Luft durch die Luftführung vom Lufteinlass zum Verdampfer geführten Luft in der Luftführung gehalten ist, sodass der Strom von Luft zum Filtern der mit dem Strom von Luft durch die Luftführung vom Lufteinlass zum Verdampfer geführten Luft durch das Luftfilterelement fliesst, wobei der Luftfilterhalter eine Luftfilterelementaustauschstellung aufweist, in welcher sich der Luftfilterhalter in einer von ausserhalb der Wärmepumpenanordnung zugänglichen Position zum Austauschen des Luftfilterelements und damit zum Entnehmen bzw. Anbringen des Luftfilterelements befindet.

Wenn die Wärmepumpenanordnung dabei die Tragstruktur aufweist, so ist der Luftfilterhalter bevorzugt bewegbar an der restlichen Wärmepumpenanordnung gelagert, indem er bewegbar an der Tragstruktur gelagert ist. In einer Variante dazu besteht aber auch die Möglichkeit, dass der Luftfilterhalter woanders als an der Tragstruktur bewegbar an der restlichen Wärmepumpenanordnung gelagert ist.

Bevorzugt ist der Luftfilterhalter von seiner Betriebsstellung in seine Luftfilterelementaustauschstellung ausziehbar und zurück einschiebbar oder ausschwenkbar und zurück einschwenkbar an der restlichen Wärmepumpenanordnung bzw. an der gegebenenfalls zur Wärmepumpenanordnung gehörenden Tragstruktur gelagert. Hierzu kann der Luftfilterhalter beispielsweise auf Rollen, gleitend oder an einer Achse schwenkbar an der restlichen Wärmepumpenanordnung bzw. an der Tragstruktur gelagert sein. Dies hat den Vorteil, dass der Luftfilterhalter auf einfache Art und Weise von seiner Betriebsstellung in seine Luftfilterelementaustauschstellung und zurück bewegbar an der restlichen Wärmepumpenanordnung bzw. an der gegebenenfalls zur Wärmepumpenanordnung gehörenden Tragstruktur gelagert werden kann. Beispielsweise kann der Luftfilterhalter durch einen Schubladenmechanismus von seiner Betriebsstellung in seine Luftfilterelementaustauschstellung ausziehbar und zurück einschiebbar der restlichen Wärmepumpenanordnung bzw. an der gegebenenfalls zur Wärmepumpenanordnung gehörenden Tragstruktur gelagert sein. Beispielsweise kann der Luftfilterhalter durch einen Schwenkmechanismus von seiner Betriebsstellung in seine Luftfilterelementaustauschstellung ausschwenkbar und zurück einschwenkbar an der restlichen Wärmepumpenanordnung bzw. an der gegebenenfalls zur Wärmepumpenanordnung gehörenden Tragstruktur gelagert.

Alternativ zu diesen Varianten besteht aber auch die Möglichkeit, dass der Luftfilterhalter nicht von seiner Betriebsstellung in seine Luftfilterelementaustauschstellung ausziehbar und zurück einschiebbar oder ausschwenkbar und zurück einschwenkbar an der restlichen Wärmepumpenanordnung bzw. an der gegebenenfalls zur Wärmepumpenanordnung gehörenden Tragstruktur gelagert ist.

Bevorzugt umfasst die Wärmepumpenanordnung das Luftfilterelement. Dies hat den Vorteil, dass die Wärmepumpenanordnung sofort einsatzbereit ist, wenn sie montiert ist. Allerdings ist nicht erforderlich, dass die Wärmepumpenanordnung das Luftfilterelement umfasst. So kann die Wärmepumpenanordnung beispielsweise ohne Luftfilterelement vertrieben werden. Dies kann beispielsweise der Fall sein, wenn das Luftfilterelement ein Standardfilterelement ist, welches über andere Vertriebskanäle als die Wärmepumpenanordnung erhältlich ist.

Vorteilhafterweise weist die Luftführung einen ersten Luftführungsabschnitt auf, welcher vom Lufteinlass zum Verdampfer reicht, und einen zweiten Luftführungsabschnitt, welcher vom Verdampfer zum Luftauslass reicht, wobei der erste Luftführungsabschnitt vom zweiten Luftführungsabschnitt separiert ist, um zu verhindern, dass innerhalb der Wärmepumpenanordnung Luft aus dem zweiten Luftführungsabschnitt unter Umgehung des Verdampfers aus dem zweiten Luftführungsabschnitt in den ersten Luftführungsabschnitts gelangen kann. Dies hat den Vorteil, dass eine Vermischung der Luft des Stroms von Luft in der Luftführung vor dem Verdampfer mit der Luft des Stroms von Luft in der Luftführung nach dem Verdampfer verhindert wird. Da die Luft des Stroms von Luft in der Luftführung nach dem Verdampfer kälter ist als die Luft des Stroms von Luft in der Luftführung vor dem Verdampfer, weil die Luft beim Verdampfer Wärmeenergie an das Kältemittel der Wärmepumpe abgibt, wird dadurch erreicht, dass die Wärmepumpenanordnung eine effizientere Bereitstellung des Brauchwarmwassers in einer Vorrichtung zur Bereitstellung von Brauchwarmwasser ermöglicht. Dadurch wird ein geringerer Strom von Luft in der Luftführung benötigt, um bei gleicher Lufttemperatur der Umgebungsluft vor dem Lufteinlass eine gleiche Heizleistung der Wärmepumpenanordnung zu erreichen. Somit reicht eine Luftführung mit geringerem Volumen aus, womit die Wärmepumpenanordnung sowie die Vorrichtung zur Bereitstellung von Brauchwarmwasser kompakter konstruiert werden können. Zudem reicht gegebenenfalls ein Ventilator aus, welcher weniger Leistung benötigt, um den Strom von Luft in der Luftführung anzutreiben. Dies führt dazu, dass die Wärmepumpenanordnung sowie die Vorrichtung zur Bereitstellung von Brauchwarmwasser insgesamt leiser konstruiert werden können.

Alternativ dazu besteht aber auch die Möglichkeit, dass die Luftführung nicht einen ersten Luftführungsabschnitt aufweist, welcher vom Lufteinlass zum Verdampfer reicht, und einen zweiten Luftführungsabschnitt, welcher vom Verdampfer zum Luftauslass reicht, wobei der erste Luftführungsabschnitt vom zweiten Luftführungsabschnitt separiert ist.

Bevorzugt beinhaltet die Wärmepumpenanordnung eine Luftführungseinrichtung zum Führen des Stroms von Luft vom Lufteinlass zum Luftfilterhalter, um den durch den Lufteinlass in die Luftführung gelangenden Strom von Luft über die gesamte Luftfilterdurchflussquerschnittsfläche verteilt durch das im Luftfilterhalter gehaltene Luftfilterelement zum Filtern der mit dem Strom von Luft durch die Luftführung vom Lufteinlass zum Verdampfer zu leiten. Dies hat den Vorteil, dass die Luft des Stroms von Luft effektiv dem Luftfilterelement zum Filtern der Luft zugeführt werden kann. Die Luftführungseinrichtung schafft in der Luftzufuhr klar definierte Verhältnisse, entsprechend ergibt sich beispielsweise bei einer gegebenen Auslegung der Wärmepumpe ein definierter COP-Wert. Die Luftführungseinrichtung kann zudem dazu beitragen, Geräusche, die im Bereich der Wärmepumpe erzeugt werden, lufteinlassseitig zu dämmen.

Vorzugsweise ist dabei die Luftführungseinrichtung eine separate Einheit, welche Bestandteil der Wärmepumpenanordnung ist. Dabei kann die Luftführungseinrichtung einstückig ausgebildet sein oder aus mehreren Teilen gefertigt sein und damit eine Baugruppe der Wärmepumpenanordnung bilden. In einer Variante dazu kann die Luftführungseinrichtung aber auch nicht als separate Einheit, sondern durch verschiedene Elemente, welche verschiedenen Baugruppen der Wärmepumpenanordnung angehören, gebildet sein. Falls die Wärmepumpenanordnung beispielsweise ein Gehäuse und die vorgehend beschriebene Tragstruktur aufweist, so kann die Luftführungseinrichtung beispielsweise durch das Gehäuse sowie die Tragstruktur gebildet sein.

Unabhängig davon, ob die Luftführungseinrichtung eine separate Einheit ist oder nicht, ist die Luftführungseinrichtung bevorzugt eine Luftführungskanaleinrichtung, durch welche im montierten Zustand der Wärmepumpenanordnung ein Luftführungskanal gebildet wird. Dies hat den Vorteil, dass die Luft des Stroms von Luft effizient und mit geringem Energieaufwand dem Filterelement zum Filtern der Luft zugeführt werden kann.

Falls die Luftführungseinrichtung eine Luftführungskanaleinrichtung ist bzw. falls die Wärmepumpenanordnung die Luftführungskanaleinrichtung beinhaltet, durch welche im montierten Zustand der Wärmepumpenanordnung ein Luftführungskanal zum Führen des Stroms von Luft vom Lufteinlass zum Luftfilterhalter gebildet wird, so weist der Luftführungskanal vorteilhafterweise eine im Wesentlichen kontinuierliche Wandung auf, um Luftverwirbelungen im Strom von Luft auf dem Weg vom Lufteinlass zum Luftfilterhalter möglichst gering zu halten. Dies hat den Vorteil, dass die Wärmepumpenanordnung sehr leise und mit geringen Energieverbrauch betrieben werden kann, da aufgrund der geringen Luftverwirbelungen weniger Geräusche entstehen und das Antreiben des Stroms von Luft vom Lufteinlass zum Luftfilterhalter weniger Energie benötigt.

In diesen Varianten ist unerheblich, ob der Luftfilterhalter eine der Luftführungseinrichtung bzw. der Luftführungskanaleinrichtung zugewandte Blende aufweist oder nicht, welche eine Öffnung mit einer Fläche aufweist, die kleiner als die Luftfilterdurchflussquerschnittsfläche ist. Auch ist unerheblich, ob die Luftführungseinrichtung bzw. Luftführungskanaleinrichtung eine dem Luftfilterhalter zugewandte Blende aufweist oder nicht, welche eine Öffnung mit einer Fläche aufweist, die kleiner als die Luftfilterdurchflussquerschnittsfläche ist. Relevant ist in diesen bevorzugten Varianten einzig, dass die Wärmepumpenanordnung eine Luftführungseinrichtung bzw. Luftführungskanaleinrichtung zum Führen des Stroms von Luft vom Lufteinlass zum Luftfilterhalter beinhaltet, mittels welcher der durch den Lufteinlass in die Luftführung gelangende Strom von Luft zum Luftfilterhalter geleitet werden kann, um den Strom von Luft über die gesamte Luftfilterdurchflussquerschnittsfläche verteilt durch das Luftfilterelement zum Filtern der mit dem Strom von Luft durch die Luftführung vom Lufteinlass zum Verdampfer zu leiten.

Falls die Luftführung einen ersten Luftführungsabschnitt aufweist, welcher vom Lufteinlass zum Verdampfer reicht, und einen zweiten Luftführungsabschnitt, welcher vom Verdampfer zum Luftauslass reicht, wobei der erste Luftführungsabschnitt vom zweiten Luftführungsabschnitt separiert ist, so bildet die Luftführungseinrichtung bzw. die Luftführungskanaleinrichtung bevorzugt zumindest einen Abschnitt des ersten Luftführungsabschnitts, welcher vom Lufteinlass zum Luftfilterhalter reicht.

Vorzugsweise ist die Luftführungseinrichtung bzw. die Luftführungskanaleinrichtung aus Schaumstoff gefertigt. Dies hat den Vorteil, dass die Luftführungseinrichtung bzw. Luftführungskanaleinrichtung ein vergleichsweise geringes Gewicht aufweist und schallabsorbierende Eigenschaften aufweist.

Ein Schaumstoff ist bevorzugt ein aus einem Kunststoffmaterial gebildeter Kunststoff, dessen Struktur viele Zellen aufweist, welche Zellen vom Kunststoffmaterial eingeschlossene Hohlräume bzw. Poren sind. Beispielsweise ist expandiertes Polypropylen (EPP) ein Schaumstoff. In einer bevorzugten Variante ist die Luftführungseinrichtung bzw. die Luftführungskanaleinrichtung aus expandiertem Polypropylen (EPP) gefertigt. Dies hat den Vorteil, dass die Luftführungseinrichtung bzw. Luftführungskanaleinrichtung kostengünstig hergestellt werden kann, ein geringes Gewicht aufweist und schallabsorbierende Eigenschaften aufweist. In einer Variante dazu ist die Luftführungseinrichtung bzw. die Luftführungskanaleinrichtung aus einem anderen Schaumstoff als expandiertem Polypropylen (EPP) gefertigt.

Alternativ zu diesen Varianten besteht aber auch die Möglichkeit, dass die Luftführungseinrichtung bzw. die Luftführungskanaleinrichtung nicht aus einem Schaumstoff gefertigt ist.

Bevorzugt ist die Luftführungseinrichtung bzw. die Luftführungskanaleinrichtung entlang eines linearen Verstellwegs bewegbar und in verschiedenen Positionen entlang des linearen Verstellwegs feststellbar, d.h. fixierbar und wieder lösbar, an einem von der Luftführungseinrichtung bzw. der Luftführungskanaleinrichtung verschiedenen Element der Wärmepumpenanordnung gelagert. Dies hat den Vorteil, dass die Luftführungseinrichtung bzw. die Luftführungskanaleinrichtung für die lokal am Ort, wo die Wärmepumpenanordnung installiert werden soll, vorhandenen Gegebenheiten angepasst positioniert werden kann. Beispielsweise kann die Luftführungseinrichtung bzw. die Luftführungskanaleinrichtung unabhängig von der Position einer (vorhandenen oder neu platzierten) Sockelleiste so positioniert werden, dass ihr Einlass bündig an die Sockelleiste bzw. an eine darin ausgesparte Einlassöffnung anschliesst.

Zudem kann dadurch erreicht werden, dass die Wärmepumpenanordnung in unterschiedlich konstruierten Vorrichtungen zur Bereitstellung von Brauchwarmwasser verwendet werden kann. So besteht beispielsweise die Möglichkeit, dass die gleiche Wärmepumpenanordnung in zwei verschieden konstruierten Vorrichtungen zur Bereitstellung von Brauchwarmwasser eingesetzt werden kann. Beispielsweise kann die eine dieser zwei Vorrichtungen zur Bereitstellung von Brauchwarmwasser ein Gehäuse aufweisen, welches auch die Wärmepumpenanordnung abdeckt und eine Öffnung aufweist, welche als Lufteinlass der Wärmepumpenanordnung dient. In diesem Fall kann die Luftführungseinrichtung bzw. die Luftführungskanaleinrichtung beispielsweise bei der Montage in einer ersten Position entlang des linearen Verstellwegs festgestellt werden, sodass sie direkt hinter dieser Öffnung im Gehäuse andockt und dadurch die durch die Öffnung im Gehäuse der Vorrichtung zur Bereitstellung von Brauchwarmwasser gelangende Luft zum Luftfilterhalter leiten kann. Weiter kann die zweite der beiden Vorrichtungen zur Bereitstellung von Brauchwarmwasser beispielsweise kein solches Gehäuse aufweisen, welches auch die Wärmepumpenanordnung abdeckt. In diesem Fall kann die Wärmepumpenanordnung beispielsweise ein eigenes Gehäuse aufweisen, welches eine Öffnung als Lufteinlass aufweist. Dabei kann die die Luftführungseinrichtung bzw. die Luftführungskanaleinrichtung bei der Montage in einer von der ersten Position verschiedenen, zweiten Position entlang des linearen Verstellwegs festgestellt werden, sodass sie direkt hinter dieser Öffnung im Gehäuse der Wärmepumpenanordnung andockt und dadurch die durch die Öffnung gelangende Luft zum Luftfilterhalter leiten kann.

Bevorzugt ist der lineare Verstellweg im montierten und betriebsbereiten Zustand der Wärmepumpenanordnung horizontal ausgerichtet. Bevorzugt weist die Wärmepumpenanordnung im montierten und betriebsbereiten Zustand eine Vorderseite und eine Rückseite auf, wobei der lineare Verstellweg vorteilhafterweise horizontal von der Vorderseite zur Rückseite bzw. der Rückseite zur Vorderseite der Wärmepumpenanordnung zeigt. Alternativ dazu kann der lineare Verstellweg aber im montierten und betriebsbereiten Zustand der Wärmepumpenanordnung anders ausgerichtet sein. So kann er beispielsweise vertikal ausgerichtet sein.

Wenn die Luftführungseinrichtung bzw. die Luftführungskanaleinrichtung entlang des linearen Verstellwegs bewegbar und in verschiedenen Positionen entlang des linearen Verstellwegs feststellbar, d.h. fixierbar und wieder lösbar, gelagert ist, und die Wärmepumpenanordnung eine Tragstruktur aufweist, so ist die Luftführungseinrichtung bzw. die Luftführungskanaleinrichtung vorzugsweise entlang des linearen Verstellwegs bewegbar und in verschiedenen Positionen entlang des linearen Verstellwegs feststellbar, d.h. fixierbar und wieder lösbar, gelagert, indem die Luftführungseinrichtung bzw. die Luftführungskanaleinrichtung an der Tragstruktur entlang des linearen Verstellwegs bewegbar und in verschiedenen Positionen entlang des linearen Verstellwegs feststellbar, d.h. fixierbar und wieder lösbar, gelagert ist. In einer Variante dazu besteht aber auch die Möglichkeit, dass die Luftführungseinrichtung bzw. die Luftführungskanaleinrichtung woanders als an der Tragstruktur an der restlichen Wärmepumpenanordnung entlang des linearen Verstellwegs bewegbar und in verschiedenen Positionen entlang des linearen Verstellwegs feststellbar, d.h. fixierbar und wieder lösbar, gelagert ist. In beiden Fällen besteht die Möglichkeit, dass die Luftführungseinrichtung bzw. die Luftführungskanaleinrichtung zusammen mit dem Luftfilterhalter entlang des linearen Verstellwegs bewegbar und in verschiedenen Positionen entlang des linearen Verstellwegs feststellbar, d.h. fixierbar und wieder lösbar, an der Tragstruktur oder sonst an der restlichen Wärmepumpenanordnung gelagert ist. Dies hat den Vorteil, dass die Luftführung vom Lufteinlass bis nach dem Luftfilterhalter auf einfache Art und Weise zuverlässig sichergestellt werden kann.

Unabhängig davon, ob die Luftführungseinrichtung bzw. die Luftführungskanaleinrichtung zusammen mit dem Luftfilterhalter entlang des linearen Verstellwegs bewegbar und in verschiedenen Positionen entlang des linearen Verstellwegs feststellbar, d.h. fixierbar und wieder lösbar, an der Tragstruktur oder sonst an der restlichen Wärmepumpenanordnung gelagert ist, ist in einer ersten Variante die Luftführungseinrichtung bzw. die Luftführungskanaleinrichtung an der Tragstruktur entlang des linearen Verstellwegs bewegbar und in verschiedenen Positionen entlang des linearen Verstellwegs feststellbar, d.h. fixierbar und wieder lösbar, gelagert, während der Luftfilterhalter von seiner Betriebsstellung in seine Luftfilterelementaustauschstellung ausziehbar und zurück einschiebbar oder ausschwenkbar und zurück einschwenkbar gelagert ist. In einer zweiten Variante hingegen ist die Luftführungseinrichtung bzw. die Luftführungskanaleinrichtung an der Tragstruktur entlang des linearen Verstellwegs bewegbar und in verschiedenen Positionen entlang des linearen Verstellwegs feststellbar, d.h. fixierbar und wieder lösbar, gelagert, während der Luftfilterhalter nicht von seiner Betriebsstellung in seine Luftfilterelementaustauschstellung ausziehbar und zurück einschiebbar oder ausschwenkbar und zurück einschwenkbar gelagert ist. In einer dritten Variante hingegen ist der Luftfilterhalter von seiner Betriebsstellung in seine Luftfilterelementaustauschstellung ausziehbar und zurück einschiebbar oder ausschwenkbar und zurück einschwenkbar an der Tragstruktur gelagert, während die Luftführungseinrichtung bzw. die Luftführungskanaleinrichtung nicht an der Tragstruktur entlang des linearen Verstellwegs bewegbar und in verschiedenen Positionen entlang des linearen Verstellwegs feststellbar, d.h. fixierbar und wieder lösbar, gelagert ist. In einer vierten Variante ist weder der Luftfilterhalter bewegbar an der Tragstruktur gelagert, noch die Luftführungseinrichtung bzw. die Luftführungskanaleinrichtung an der Tragstruktur entlang des linearen Verstellwegs bewegbar und in verschiedenen Positionen entlang des linearen Verstellwegs feststellbar, d.h. fixierbar und wieder lösbar, gelagert. Dabei besteht auch die Möglichkeit, dass die Luftführungseinrichtung bzw. die Luftführungskanaleinrichtung nicht entlang eines linearen Verstellwegs bewegbar und in verschiedenen Positionen entlang des linearen Verstellwegs feststellbar, d.h. fixierbar und wieder lösbar, an der restlichen Wärmepumpenanordnung gelagert ist.

Vorzugsweise ist die Luftführungseinrichtung bzw. die Luftführungskanaleinrichtung austauschbar. Alternativ dazu besteht aber auch die Möglichkeit, dass die Luftführungseinrichtung bzw. die Luftführungskanaleinrichtung nicht austauschbar ist.

Die Luftführungseinrichtung, bzw. die Luftführungskanaleinrichtung kann auch separat von der Wärmepumpenanordnung hergestellt und/oder vertrieben werden. In diesem Fall handelt es sich um eine Luftführungseinrichtung, bzw. Luftführungskanaleinrichtung für eine erfindungsgemässe Wärmepumpenanordnung.

Vorteilhafterweise ist dabei die Luftführungseinrichtung bzw. die Luftführungskanaleinrichtung wie vorgehend beschrieben aus Schaumstoff gefertigt. Alternativ dazu besteht aber auch die Möglichkeit, dass die Luftführungseinrichtung bzw. die Luftführungskanaleinrichtung nicht aus Schaumstoff gefertigt ist.

Alternativ zu diesen Varianten besteht aber auch die Möglichkeit, dass die Wärmepumpenanordnung ohne eine solche Luftführungseinrichtung, bzw. Luftführungskanaleinrichtung auskommt. Derartige Ausführungen kommen insbesondere dann zum Einsatz, wenn der zur Verfügung stehende Raum für die Einrichtung nicht ausreicht, z. B. dann, wenn vorhandene Leitungsrohre in einen Raum unterhalb der Wärmepumpe hinein ragen.

Wird keine Luftführungseinrichtung verwendet, ist sicherzustellen, dass der Bereich der Luftzuführung vom Bereich des Luftauslasses ausreichend isoliert ist, um einen "thermischen Kurzschluss" zu vermeiden. Dies kann insbesondere dadurch erfolgen, dass die Luftzuführung in einem ersten Abteil eines Aufnahmeraums (z. B. eines Schranks), z. B. einem unteren Abteil, und der Auslass in einem zweiten Abteil des Aufnahmeraums, z. B. einem oberen Abteil ausgebildet sind, wobei die beiden Abteile so gegeneinander abgedichtet sind, dass ein direkter Luftaustausch zwischen den beiden Abteilen nicht oder nur sehr eingeschränkt erfolgen kann. Die Tragstruktur kann Elemente zur Herstellung dieser Abdichtung aufweisen, z. B. Anbringungsmöglichkeiten für Dichtelemente und/oder Aufnahmen für Dichtstoffe.

Vorteilhafterweise beinhaltet eine Vorrichtung zur Bereitstellung von Brauchwarmwasser einen Warmwasserspeicher zum Speichern des Brauchwarmwassers und eine erfindungsgemässe Wärmepumpenanordnung. Dabei ist der Begriff "Warmwasserspeicher" bevorzugt breiter als gemäss der Norm SIA 385/1:2011 zu verstehen und umfasst bevorzugt Wasserspeicher mit eingebauten Heizflächen und Wasserspeicher ohne eingebaute Heizflächen. Entsprechend ist der Begriff "Warmwasserspeicher" im vorliegenden Text derart zu verstehen, dass er sowohl Speicherwassererwärmer gemäss der Norm SIA 385/1:2011 als auch Warmwasserspeicher gemäss der Norm SIA 385/1:2011 umfasst.

Bevorzugt weist der Warmwasserspeicher ein Warmwasserspeichervolumen von mindestens 120 Liter, besonders bevorzugt mindestens 150 Liter, auf. Dies hat den Vorteil, dass die Vorrichtung zur Bereitstellung von Brauchwarmwasser besonders für die Installation und damit den Einsatz in Wohnungen geeignet ist. Alternativ dazu besteht aber auch die Möglichkeit, dass der Warmwasserspeicher ein Warmwasserspeichervolumen von weniger als 120 Liter aufweist.

Vorzugsweise beinhaltet die Vorrichtung eine Wärmedämmung des Warmwasserspeichers. Dies hat den Vorteil, dass beim Speichern des erwärmten Wassers im Warmwasserspeicher länger warm gehalten werden kann, womit das gespeicherte Wasser zur Bereitstellung von Brauchwarmwasser weniger nachgeheizt werden muss. Somit kann die Vorrichtung zur Bereitstellung von Brauchwarmwasser energieeffizienter betrieben werden. Alternativ dazu besteht aber auch die Möglichkeit, dass die Vorrichtung keine Wärmedämmung beinhaltet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Vorrichtung zur Bereitstellung von Brauchwarmwasser, welche einen Warmwasserspeicher zum Speichern des Brauchwarmwassers und eine erfindungsgemässe Wärmepumpenanordnung für eine Vorrichtung zur Bereitstellung des Brauchwarmwassers beinhaltet,
- Fig. 2a, b: einen Luftfilterhalter der Wärmepumpenanordnung in einer Betriebsstellung sowie in einer Luftfilterelementaustauschstellung,
- Fig. 3: eine Querschnittsdarstellung durch die in Figur 1 gezeigte Wärmepumpenanordnung,
- Fig. 4a, 4b: je eine Seitenansicht der in den Figuren 1 bis 3 dargestellten Wärmepumpenanordnung,
- Fig. 5a, 5b: je eine Schrägansicht einer weiteren Vorrichtung zur Bereitstellung von Brauchwarmwasser mit einer weiteren erfindungsgemässen Wärmepumpenanordnung,
- Fig. 6a, 6b: je eine Schrägansicht einer weiteren Vorrichtung zur Bereitstellung von Brauchwarmwasser mit einer weiteren erfindungsgemässen Wärmepumpenanordnung, und
- Fig. 7: eine Querschnittsdarstellung durch die in den Figuren 6a und 6b gezeigte Vorrichtung zur Bereitstellung von Brauchwarmwasser mit der weiteren erfindungsgemässen Wärmepumpenanordnung, wobei mittels Pfeilen der Strom von Luft durch den Lufteinlass in die Luftführung der Wärmepumpenanordnung zum Verdampfer und anschliessend dem Luftauslass gezeigt ist.

Grundsätzlich sind in den Figuren gleiche Teile mit gleichen Bezugszeichen versehen.

### Wege zur Ausführung der Erfindung

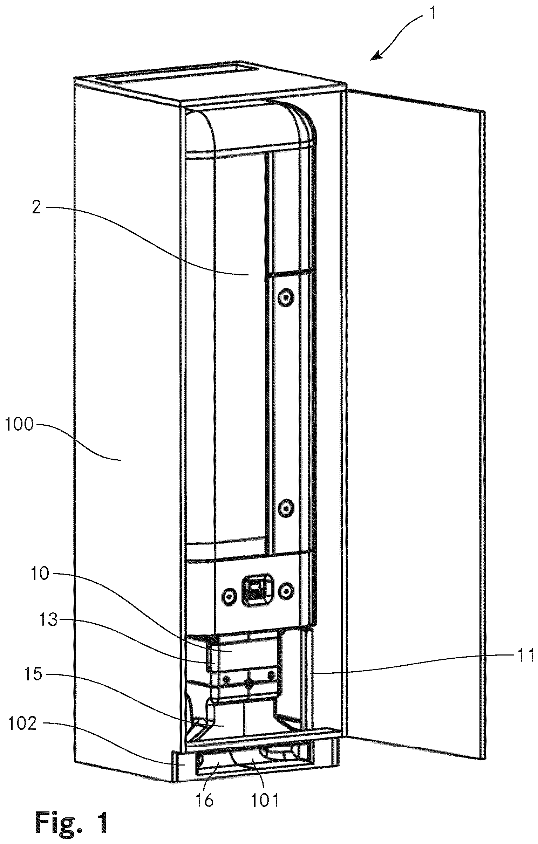

Figur 1 zeigt eine Vorrichtung 1 zur Bereitstellung von Brauchwarmwasser, welche einen Warmwasserspeicher 2 zum Speichern des Brauchwarmwassers und eine erfindungsgemässe Wärmepumpenanordnung 10 für eine Vorrichtung 1 zur Bereitstellung des Brauchwarmwassers beinhaltet. Der Warmwasserspeicher 2 der Vorrichtung 1 weist ein Warmwasserspeichervolumen von 200 Liter auf. In Varianten dazu kann das Warmwasserspeichervolumen aber auch grösser oder kleiner sein. So kann das Warmwasserspeichervolumen beispielsweise 150 Liter oder 400 Liter betragen.

Bei der Vorrichtung 1 handelt es sich um einen Hochschrankboiler, welcher eine Breite von 549 mm, eine Tiefe von 549 mm sowie eine Höhe von 2399 mm aufweist und damit der ehemaligen Schweizer SINK-Norm, welche dem im Jahr 2021 gültigen "Schweizer Mass-System" (SMS) entspricht, genügt. Entsprechend ist die Vorrichtung 1 in einen Schrank 100 eingebaut.

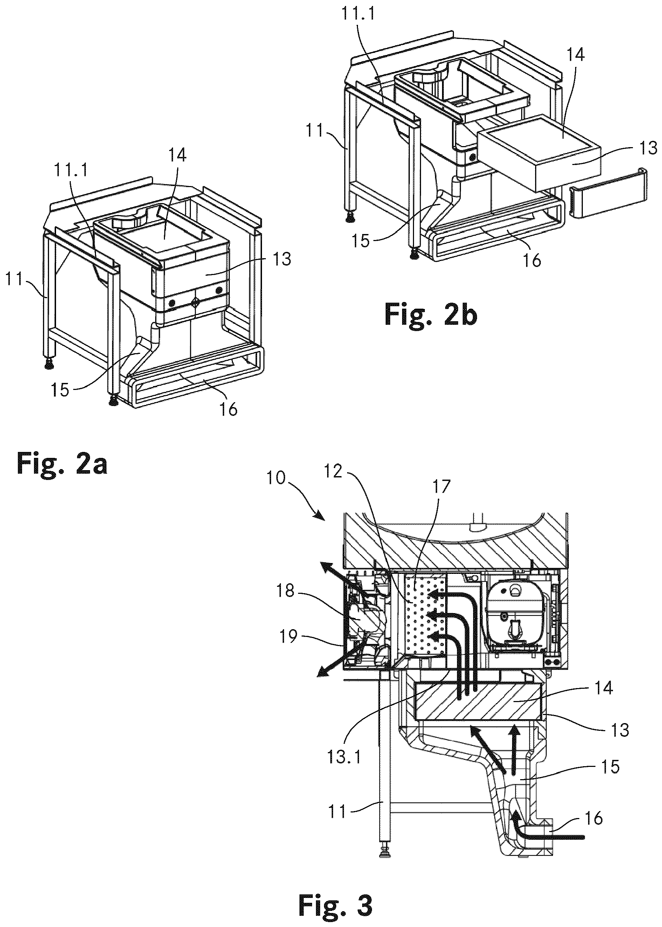

Wie in der Figur 1 ersichtlich, weist die Wärmepumpenanordnung 10 eine Tragstruktur 11 zum Tragen der Komponenten der Wärmepumpenanordnung 10 auf. Weiter beinhaltet die Wärmepumpenanordnung 10, wie insbesondere in Figur 3 ersichtlich, eine Wärmepumpe 12 zum Erwärmen von Trinkwasser auf eine Warmwassertemperatur von 62°C und damit zur Erzeugung des Brauchwarmwassers, welches im Warmwasserspeicher 2 gespeichert werden kann. Diese Wärmepumpe 12 ist oben auf der Tragstruktur 11 angeordnet, während der Warmwasserspeicher 2 über der Wärmepumpe 12 angeordnet ist. Ausserdem beinhaltet die Wärmepumpenanordnung 10 einen unterhalb der Wärmepumpe 12 in der Tragstruktur 11 angeordneten Luftfilterhalter 13 zum Halten eines Luftfilterelements 14 zum Filtern von Luft (siehe Figuren 2a, 2b und 3).

Ausserdem beinhaltet die Wärmepumpenanordnung 10 eine Luftführungskanaleinrichtung 15, durch welche im montierten Zustand der Wärmepumpenanordnung 10 ein Luftführungskanal gebildet wird. Dieser Luftführungskanal weist eine im Wesentlichen kontinuierliche Wandung auf, um Luftverwirbelungen im Strom von Luft auf dem Weg einem unteren Einlassende der Luftführungskanaleinrichtung 15 zum Luftfilterhalter 13 möglichst gering zu halten. Dieses untere Einlassende der Luftführungskanaleinrichtung 15 ist gerade hinter einer Öffnung 101 in der Sockelleiste 102 des Schranks 100 angeordnet und bildet somit einen Lufteinlass 16, durch welchen von ausserhalb des Schranks 100 Luft in den von der Luftführungskanaleinrichtung 15 gebildeten Luftführungskanal gelangen kann. Üblicherweise ist die Öffnung 101 in der Sockelleiste 102 mit einem Gitter versehen (nicht dargestellt). Gängigerweise handelt es sich in Haushalten dabei um Lamellengitter mit einem freien Durchfluss von ca. 200 cm², entsprechend den Vorgaben von Geräteherstellern, insbesondere Kühlgeräteherstellern.

Die Luftführungskanaleinrichtung 15 bildet eine Luftführungseinrichtung zum Führen eines Stroms von Luft vom Lufteinlass 16 zum Luftfilterhalter 13, wobei der Strom von Luft über eine gesamte Lufteinlassquerschnittsfläche des Lufteinlasses 16 verteilt durch den Lufteinlass 16 in die Luftführungskanaleinrichtung 15 fliessen kann. Dabei ist die Luftführungskanaleinrichtung 15 aus expandiertem Polypropylen (EPP) und somit aus einem Schaumstoff gefertigt, um allfällige Schallentwicklungen aufgrund von Luftverwirbelungen im Strom von Luft im Luftführungskanal zu dämpfen.

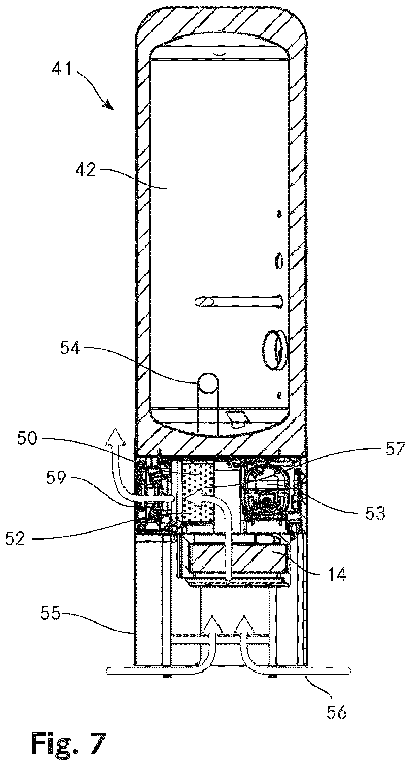

Wie in Figur 7 im Zusammenhang mit einer weiteren erfindungsgemässen Wärmepumpenanordnung 50 detaillierter erläutert, umfasst auch die Wärmepumpe 12 der in Figur 1 gezeigten Wärmepumpenanordnung 10 einen Verdampfer 17 zur Nutzung von Luft als Wärmequelle zum Verdampfen eines Kältemittels der Wärmepumpe 12. Weiter umfasst die Wärmepumpe 12 ebenfalls einen Kondensator zum Kondensieren des Kältemittels und dabei zum Erwärmen von Wasser für die Erzeugung des Brauchwarmwassers, einen Verdichter zum Verdichten des Kältemittels und eine Drossel. Bei dem Verdichter handelt es sich um einen elektrisch betriebenen Kompressor zum Komprimieren des Kältemittels. Da der Kompressor elektrisch betrieben ist, ist der Verdichter ein elektrischer Verdichter und die Wärmepumpe 12 eine elektrische Wärmepumpe.

In der in Figur 1 gezeigten Vorrichtung 1 ist der Kondensator der Wärmepumpe 12 im Warmwasserspeicher 2 angeordnet, um das im Warmwasserspeicher 2 gespeicherte Wasser zu erwärmen. In einer Variante davon ist der Kondensator der Wärmepumpe 12 hingegen ausserhalb des Warmwasserspeichers 2 angeordnet. Diesem Fall wird das Wasser zum Erwärmen zum Kondensator geführt und nach dem Erwärmen im Warmwasserspeicher 2 gespeichert.

Die Figuren 2a und 2b zeigen je die Tragstruktur 11 der in Figur 1 gezeigten Wärmepumpenanordnung 10 mit dem Luftfilterhalter 13 und der unterhalb des Luftfilterhalters 13 angeordneten Luftführungskanaleinrichtung 15 mit dem Lufteinlass 16. Dabei ist in beiden Figuren zu erkennen, dass im Luftfilterhalter 13 ein zur Wärmepumpenanordnung 10 gehöhrendes Luftfilterelement 14 gehalten ist.

Dieses Luftfilterelement 14 ist im vorliegenden Fall ein von der Schweizer Firma Tecnofil AG unter der Bezeichnung ZFP-KA-4 coarse 60% 94 mm vertriebenes Filterelement. Dabei handelt es sich um einen plissierten Zellenfilter mit einem Kartonrahmen, welcher nach der Norm ISO 16890 vom Dezember 20216 der Filtergruppe ISO coarse zugehört, einen Anfangsabscheidegrad von 60% aufweist und eine Dicke von 94 mm aufweist. Die Durchflussquerschnittsfläche beträgt 536 cm². In Varianten kann das Filterelement aber auch ein anderes, andersartig ausgebildetes Luftfilterelement sein.

In Figur 2a ist der Luftfilterhalter 13 in einer Betriebsstellung gezeigt, in welcher sich der Luftfilterhalter 13 in einer Position befindet, in welcher das im Luftfilterhalter 13 gehaltene Luftfilterelement 14 zum Filtern der mit dem Strom von Luft durch die Luftführungskanaleinrichtung 15 vom Lufteinlass 16 zum Verdampfer 17 der Wärmepumpe 12 geführten Luft im Strom von Luft gehalten ist, sodass der Strom von Luft zum Filtern der mit dem Strom von Luft geführten Luft durch das Luftfilterelement 14 fliesst. Dabei weist das Luftfilterelement 14 Luftfilterdurchflussquerschnittsfläche auf, wobei der Strom von Luft über die gesamte Luftfilterdurchflussquerschnittsfläche verteilt durch das Luftfilterelement 14 zum Filtern der mit dem Strom von Luft durch die Luftführungskanaleinrichtung 15 vom Lufteinlass 16 zum Verdampfer der Wärmepumpe 12 geführten Luft fliessen kann.

In Figur 2b ist der Luftfilterhalter 13 in einer Luftfilterelementaustauschstellung gezeigt, in welcher sich der Luftfilterhalter 13 in einer von ausserhalb der Wärmepumpenanordnung 10 zugänglichen Position zum Austauschen des Luftfilterelements 14 und damit zum Entnehmen bzw. Anbringen des Luftfilterelements 14 befindet. Dabei ist der Luftfilterhalter 13 mittels eines Schubladenmechanismus von seiner Betriebsstellung in seine Luftfilterelementaustauschstellung ausziehbar und zurück in seine Betriebsstellung einschiebbar an der Tragstruktur 11 und damit an der restlichen Wärmepumpenanordnung 10 gelagert. In einer Variante dazu ist der Luftfilterhalter von seiner Betriebsstellung in seine Luftfilterelementaustauschstellung ausschwenkbar und zurück einschwenkbar an der Tragstruktur 11 oder sonst an der restlichen Wärmepumpenanordnung 10 gelagert.

Ebenfalls in den Figuren 2a, 2b gut sichtbar ist, dass die seitlichen Trageabschnitte 11.1 der Tragstruktur 11, auf die die Wärmepumpenanordnung 10 aufgesetzt wird, eine aussenseitige Nut mit im Wesentlichen quadratischem Querschnitt aufweisen. Falls es die Einbausituation erfordert, kann in diese Nut ein Dichtmaterial, z. B. Steinwolle, Schaumstoff oder ein anderer geeigneter Dichtstoff auf Silikon-, Polymer oder Kautschukbasis, eingefüllt werden, um gegen eine die Trageabschnitte 11.1 kontaktierende Wandung abzudichten. Eine solche Abdichtung, die auch unabhängig von der erwähnten Nut erfolgen kann, ist insbesondere dann erforderlich, wenn keine Luftführungskanaleinrichtung 15 zum Einsatz kommt.

Figur 3 zeigt eine Querschnittsdarstellung durch die in Figur 1 gezeigte Wärmepumpenanordnung 10. Dabei verläuft der Querschnitt durch die Luftführungskanaleinrichtung 15, den Lufteinlass 16, den Luftfilterhalter 13 mit dem darin gehaltenen Luftfilterelement 14 sowie dem über dem Luftfilterelement 14 angeordneten Verdampfer 17 der Wärmepumpe 12. Dabei ist die Flussrichtung des Stroms von Luft durch den Lufteinlass 16, den Luftführungskanal und das Filterelement 14 zum Verdampfer 17 mittels Pfeilen angezeigt. Aufgrund dieser Pfeile ist erkennbar, dass die Luft über dem Filterelement 14 zuerst etwas aufsteigt und dann in der Wärmepumpenanordnung 10 nach hinten (was in der Figur 3 nach links entspricht) durch den Verdampfer 17 bewegt wird. Die Luft ist dabei durch eine gerade über dem Filterhalter 13 angeordnete Blende 13.1 geführt, welche im vorderen Bereich vor dem Verdampfer 17 eine Ausnehmung aufweist. Dadurch wird erreicht, dass die Luft nach dem Durchqueren des Filterelements 14 vor dem Verdampfer 17 aufsteigt und dann nach hinten durch den Verdampfer 17 bewegt wird.

In der Figur 3 ist ersichtlich, dass die Wärmepumpenanordnung 10 einen hinter dem Verdampfer 17 angeordneten Ventilator 18 aufweist, welcher dazu dient, den Strom von Luft anzutreiben, indem durch den Ventilator 18 die Luft vom Verdampfer 17 her ansaugt und anschliessend weiter bewegt wird. In der in Figur 1 gezeigten Darstellung der Vorrichtung 1 zur Bereitstellung von Brauchwarmwasser befindet sich dieser Ventilator 18 nicht sichtbar hinten im Schrank 100. Dadurch wird die Luft des Stroms von Luft vom Verdampfer 17 her durch den Ventilator 18 hinten im Schrank 100 zwischen der Verschalung des Schranks 100 und dem Warmwasserspeicher 2 nach oben bewegt, wo sie aus dem Schrank 100 entweichen kann.

Somit durch die Wärmepumpenanordnung 10 im montierten Zustand der Wärmepumpenanordnung 10 eine Luftführung gebildet, welche einen Lufteinlass 16 und hinter dem Ventilator 18 einen Luftauslass 19 aufweist, wobei mittels der Luftführung ein Strom von Luft vom Lufteinlass 16 zum Verdampfer 17 zur Nutzung als Wärmequelle und anschliessend vom Verdampfer 17 zum Luftauslass 19 führbar ist, welcher Strom von Luft durch den Ventilator 18 antreibbar ist. Dabei beinhaltet die Wärmepumpenanordnung 10 den Luftfilterhalter 13 zum Halten des Luftfilterelements 14 mit einer Luftfilterdurchflussquerschnittsfläche in der Luftführung zum Filtern der mit dem Strom von Luft durch die Luftführung vom Lufteinlass 15 zum Verdampfer 17 geführten Luft. Der Strom von Luft kann dabei über eine gesamte Lufteinlassquerschnittsfläche des Lufteinlasses 15 verteilt durch den Lufteinlass 15 in die Luftführung fliessen und über die gesamte Luftfilterdurchflussquerschnittsfläche verteilt durch das Luftfilterelement 14 zum Filtern der mit dem Strom von Luft durch die Luftführung vom Lufteinlass 15 zum Verdampfer 17 geführten Luft fliessen. Dabei ist die Luftfilterdurchflussquerschnittsfläche 6 mal so gross wie die Lufteinlassquerschnittsfläche. In einer ersten Variante dazu ist die Luftfilterdurchflussquerschnittsfläche 5 mal so gross wie die Lufteinlassquerschnittsfläche. In einer zweiten Variante dazu ist die Luftfilterdurchflussquerschnittsfläche 4 mal so gross wie die Lufteinlassquerschnittsfläche. In einer dritten Variante dazu ist die Luftfilterdurchflussquerschnittsfläche 3 mal so gross wie die Lufteinlassquerschnittsfläche.

Wie in Figur 3 erkennbar, weist die Luftführung auf ihrem gesamten Weg vom Lufteinlass 15 zum Luftfilterhalter 13 einen Luftführungsquerschnitt mit einer Luftführungsquerschnittsfläche auf, welche Luftführungsquerschnittsfläche mindestens so gross wie die Lufteinlassquerschnittsfläche und über eine Länge von wenigstens 80% des Wegs vom Lufteinlass 15 zum Luftfilterhalter 13 um mindestens 10% grösser als die Lufteinlassquerschnittsfläche ist.

Dadurch, dass die Luftführungskanaleinrichtung 15 den von ihr gebildeten Luftführungskanal gegen aussen abschliesst und der Verdampfer 17 gleich oberhalb des Luftfilterhalters 13 angeordnet ist, weist die Luftführung der Wärmepumpenanordnung 10 einen ersten Luftführungsabschnitt auf, welcher vom Lufteinlass 16 zum Verdampfer 17 reicht. Zudem weist die Luftführung der Wärmepumpenanordnung 10 einen zweiten Luftführungsabschnitt auf, welcher vom Verdampfer 17 via den Ventilator 18 zum Luftauslass 19 reicht, wobei der erste Luftführungsabschnitt vom zweiten Luftführungsabschnitt separiert ist, um zu verhindern, dass innerhalb der Wärmepumpenanordnung 10 Luft aus dem zweiten Luftführungsabschnitt unter Umgehung des Verdampfers 17 aus dem zweiten Luftführungsabschnitt in den ersten Luftführungsabschnitts gelangen kann. Dadurch wird eine Vermischung der Luft des Stroms von Luft in der Luftführung vor dem Verdampfer 17 mit der Luft des Stroms von Luft in der Luftführung nach dem Verdampfer 17 verhindert.

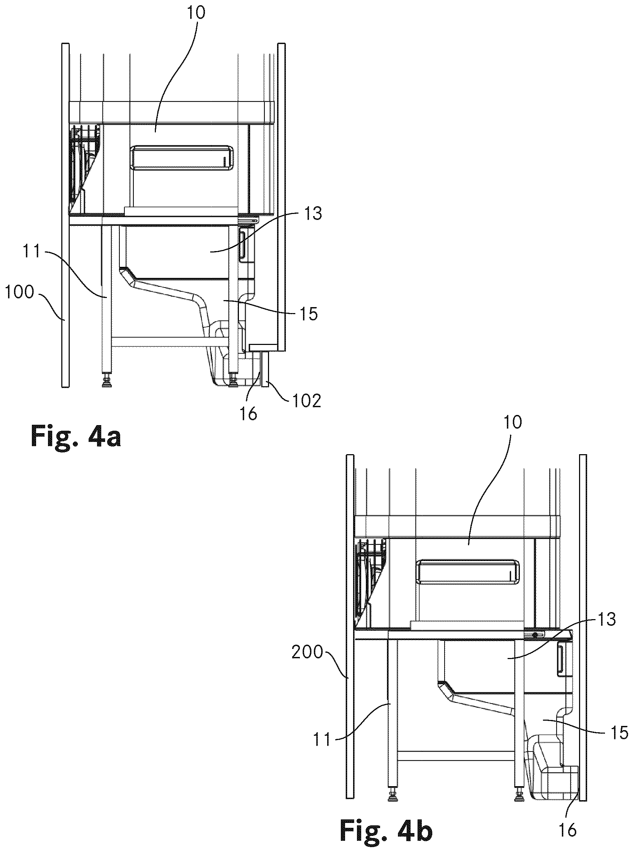

Die Figuren 4a und 4b zeigen je eine Seitenansicht der Wärmepumpenanordnung 10, welcher bereits in den Figuren 1 bis 3 dargestellt ist. In der Figur 4a ist die Wärmepumpenanordnung 10 zusammen mit der Vorrichtung 1 zur Bereitstellung von Brauchwarmwasser im Schrank 100 eingebaut gezeigt, in welchen sie auch in Figur 1 eingebaut dargestellt ist. In der Figur 4a befindet sich die Sockelleiste 102 unten rechts. In Figur 4b hingegen ist die Wärmepumpenanordnung 10 zusammen mit der Vorrichtung 1 zur Bereitstellung von Brauchwarmwasser in einen anderen Schrank 200 eingebaut dargestellt. Wie im Vergleich zwischen den beiden Figuren 4a und 4b erkennbar ist, weist der in Figur 4b gezeigte Schrank 200 keine Sockelleiste auf. Vielmehr reicht die Vorderseite des Schranks 200, welche sich in der Figur 4b auf der rechten Seite befindet, vertikal von oben nach unten führend bis an den Boden. Dabei weist die Vorderseite des Schranks 200 in ihrem unteren Bereich ebenfalls eine Öffnung auf, hinter welcher das untere Einlassende der Luftführungskanaleinrichtung 15, welches den Lufteinlass 16 der Wärmepumpenanordnung 10 bildet, angeordnet ist.

Damit bei den beiden unterschiedlich konstruierten Schränken 100, 200, welche in den Figuren 4a und 4b dargestellt sind, das untere Einlassende der Luftführungskanaleinrichtung 15, welches den Lufteinlass 16 bildet, direkt hinter der jeweiligen Öffnung im jeweiligen Schrank 100, 200 angeordnet werden kann, ermöglicht die Wärmepumpenanordnung 10 die Anordnung der Luftführungskanaleinrichtung 15 zusammen mit dem Luftfilterhalter 13 in verschiedenen Positionen. Dies erlaubt es analog auch bei einem Einbau hinter einer Sockelleiste 102, wie er in der Figur 1 dargestellt ist, das untere Einlassende der Luftführungskanaleinrichtung 15 unmittelbar angrenzend an die Innenseite der Sockelleiste 102 bzw. den darin ausgesparten Lufteinlass 16 zu positionieren. Hierzu ist die Luftführungskanaleinrichtung 15 zusammen mit dem Filterhalter 13 entlang eines linearen Verstellwegs bewegbar und in verschiedenen Positionen entlang des linearen Verstellwegs feststellbar, d.h. fixierbar und wieder lösbar, an der Tragstruktur 11 und damit einem von der Luftführungskanaleinrichtung 15 verschiedenen Element der Wärmepumpenanordnung 10 gelagert. Dabei ist der lineare Verstellweg im montierten und betriebsbereiten Zustand der Wärmepumpenanordnung 10 horizontal ausgerichtet, wobei die Wärmepumpenanordnung 10 im montierten und betriebsbereiten Zustand eine Vorderseite und eine Rückseite aufweist, wobei der lineare Verstellweg horizontal von der Vorderseite zur Rückseite bzw. der Rückseite zur Vorderseite der Wärmepumpenanordnung 10 zeigt.

Da die Luftführungskanaleinrichtung 15 zusammen mit dem Luftfilterhalter 13 in verschiedenen Positionen entlang dem linearen Verstellweg an der Tragstruktur 11 feststellbar ist, kann der Luftfilterhalter 13 in unterschiedlichen Positionen relativ zum Verdampfer 17 angeordnet werden. Damit dabei die Luft, welche durch das im Filterhalter 13 gehaltene Filterelement 14 aufsteigt, unabhängig von der Positionierung der Luftführungskanaleinrichtung 15 und des Luftfilterhalters 13 entlang dem linearen Verstellweg vor dem Verdampfer 17 aufsteigt und anschliessend nach hinten durch den Verdampfer 17 bewegt werden kann, beinhaltet die Wärmepumpenanordung 10 die im Zusammenhang mit Figur 3 erwähnte Blende 13.1. Diese Blende 13.1 ist gerade über dem Filterhalter 13 angeordnet und weist, wie bereits erwähnt, in ihrem vorderen Bereich vor dem Verdampfer 17 eine Ausnehmung auf. Diese Ausnehmung weist eine Fläche auf, welche kleiner als die Luftfilterdurchflussquerschnittsfläche ist. Dabei ist die Ausnehmung in der Blende 13.1 derart positioniert, dass sie sich unabhängig von der Positionierung der Luftführungskanaleinrichtung 15 und des Luftfilterhalters 13 entlang dem linearen Verstellweg immer über der Luftfilterdurchflussquerschnittsfläche des Luftfilterelements 14 befindet.

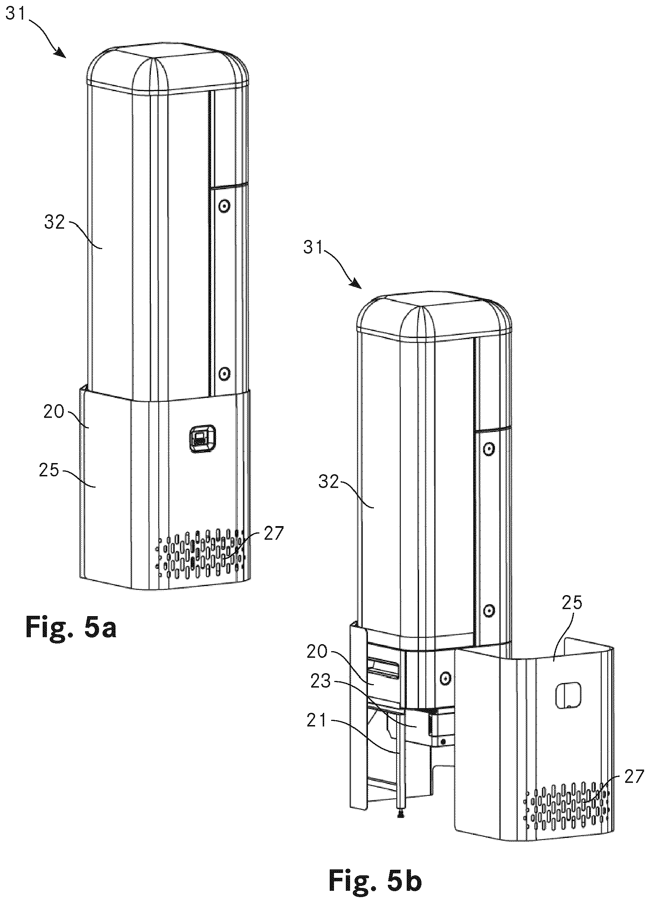

In den Figuren 5a und 5b ist je eine Schrägansicht einer weiteren Vorrichtung 31 zur Bereitstellung von Brauchwarmwasser mit einer weiteren erfindungsgemässen Wärmepumpenanordnung 20 dargestellt. Diese weitere Vorrichtung 31 zur Bereitstellung von Brauchwarmwasser ist eine freistehende Vorrichtung 31 und damit kein Hochschrankboiler. Die darin verwendete Wärmepumpenanordnung 20 unterscheidet sich zudem etwas von der in den Figuren 1 bis 4b dargestellten Wärmepumpenanordnung 10. So umfasst die in Figuren 5a und 5b gezeigte Wärmepumpenanordnung 20 ein Gehäuse 25, welches an der Tragstruktur 21 befestigt ist und die Wärmepumpenanordnung 20 vom Warmwasserspeicher 32 an abwärts bis zum Boden abdeckt.

In der Figur 5a ist die Vorrichtung 31 zur Bereitstellung von Brauchwarmwasser mit der Wärmepumpenanordnung 20 mit dem betriebsbereit montierten Gehäuse 25 dargestellt. In Figur 5b hingegen ist die Vorrichtung 31 zur Bereitstellung von Brauchwarmwasser mit der Wärmepumpenanordnung 20 mit dem nur teilweise montierten Gehäuse 25 dargestellt. Dadurch ist in der Figur 5b der Innenbereich des Gehäuses 25 einsehbar. Dadurch ist zu erkennen, dass die in den Figuren 5a und 5b gezeigte Wärmepumpenanordnung 20 keine Luftführungseinheit aufweist, sondern dass der Filterhalter 23 mit seiner Unterseite freisteht. Zudem ist in den Figuren 5a und 5b zu erkennen, dass das Gehäuse 25 auf seiner Vorderseite mehrere Öffnungen 27 aufweist. Im montierten der Wärmepumpenanordnung 20 bildet das Gehäuse 25 einen Raum, welcher durch diese Öffnungen 27 von ausserhalb der Vorrichtung 31 zugänglich ist. Daher fliesst im Betrieb der Wärmepumpenanordnung 20 die Luft durch diese Öffnungen 27 in das Gehäuse 25 und anschliessend zum Liftfilterhalter 23. Somit bilden die Öffnungen 27 gemeinsam den Lufteinlass 26 der Luftführung der Wärmepumpenanordnung 20.

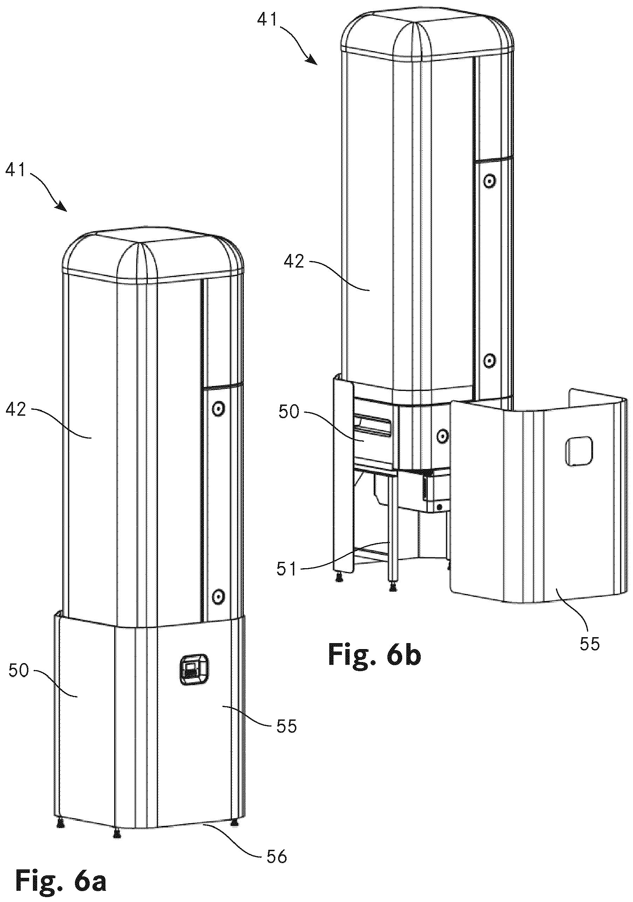

In den Figuren 6a und 6b ist je eine Schrägansicht einer weiteren Vorrichtung 41 zur Bereitstellung von Brauchwarmwasser mit einer weiteren erfindungsgemässen Wärmepumpenanordnung 50 dargestellt.

Diese weitere Vorrichtung 41 zur Bereitstellung von Brauchwarmwasser ist ebenfalls eine freistehende Vorrichtung 41 und damit kein Hochschrankboiler. Die darin verwendete Wärmepumpenanordnung 50 umfasst wie die in Figuren 5a und 5b gezeigte Wärmepumpenanordnung 20 keine Luftführungseinrichtung, dafür aber ein Gehäuse 55, welches an der Tragstruktur 51 befestigt ist und die Wärmepumpenanordnung 50 vom Warmwasserspeicher 42 an abwärts abdeckt. Dabei weist das Gehäuse 55 der in den Figuren 6a und 6b gezeigten Wärmepumpenanordnung 50 jedoch keine Öffnungen aus, welche als Lufteinlass dienen. Dafür reicht das Gehäuse 55 aber im montierten Zustand der Wärmepumpenanordnung 50 nicht bis an den Boden. In dieser Ausführung bildet die Lücke zwischen dem Boden und dem Gehäuse 55 den Lufteinlass 56 der in den Figuren 6a und 6b gezeigten Wärmepumpenanordnung 50.

In Figur 7 ist eine Querschnittsdarstellung durch die in den Figuren 6a und 6b gezeigte Vorrichtung 41 zur Bereitstellung von Brauchwarmwasser mit der weiteren erfindungsgemässen Wärmepumpenanordnung 50 gezeigt, wobei mittels Pfeilen der Strom von Luft durch den Lufteinlass 56 in die Luftführung der Wärmepumpenanordnung 50 zum Verdampfer 57 und anschliessend dem Luftauslass 59 gezeigt ist.

In der in Figur 7 gezeigten Querschnittsdarstellung ist zu erkennen, dass die Wärmepumpe 52 der Wärmepumpenanordnung 50 den Verdampfer 57 zur Nutzung von Luft als Wärmequelle zum Verdampfen eines Kältemittels der Wärmepumpe 52 umfasst. Weiter ist zu erkennen, dass die Wärmepumpe 52 einen Kondensator 54 zum Kondensieren des Kältemittels und dabei zum Erwärmen von Wasser für die Erzeugung des Brauchwarmwassers umfasst, welcher im Warmwasserspeicher 42 der Vorrichtung 41 zur Bereitstellung von Brauchwarmwasser angeordnet ist. Weiter umfasst die Wärmepumpe 52, einen Verdichter 53 zum Verdichten des Kältemittels und eine Drossel. Bei dem Verdichter 53 handelt es sich um einen elektrisch betriebenen Kompressor zum Komprimieren des Kältemittels. Da der Kompressor elektrisch betrieben ist, ist der Verdichter 53 ein elektrischer Verdichter und die Wärmepumpe 52 eine elektrische Wärmepumpe.

Die Erfindung ist nicht auf die im Zusammenhang mit den Figuren beschriebenen Ausführungsformen beschränkt. Vielmehr sind dem Fachmann aufgrund des vorliegenden Textes unmittelbar auch weitere erfindungsgemässe Varianten und Variationen zugänglich.

Zusammenfassend ist festzustellen, dass eine dem eingangs genannten technischen Gebiet zugehörende Wärmepumpenanordnung für eine Vorrichtung zur Bereitstellung von Brauchwarmwasser geschaffen wird, welche einen leiseren Betrieb ermöglicht.

## Patentansprüche

1. Wärmepumpenanordnung (10, 20, 50) für eine Vorrichtung (1, 31, 41) zur Bereitstellung von Brauchwarmwasser,
a) wobei die Wärmepumpenanordnung (10, 20, 50) eine Wärmepumpe (12, 52) zum Erwärmen von Wasser, insbesondere Trinkwasser, auf eine Warmwassertemperatur und damit zur Erzeugung des Brauchwarmwassers beinhaltet, wobei die Wärmepumpe (12, 52) einen Verdampfer (17, 57) zur Nutzung von Luft als Wärmequelle zum Verdampfen eines Kältemittels umfasst,
b) wobei die Wärmepumpenanordnung (10, 20, 50) zum Bilden einer Luftführung im montierten Zustand der Wärmepumpenanordnung (10, 20, 50) ausgebildet ist, welche Luftführung einen Lufteinlass (16, 26, 56) und einen Luftauslass (19, 59) aufweist, wobei mittels der Luftführung ein Strom von Luft vom Lufteinlass (16, 26, 56) zum Verdampfer (17, 57) zur Nutzung als Wärmequelle und anschliessend vom Verdampfer (17, 57) zum Luftauslass (19, 59) führbar ist,
c) wobei die Wärmepumpenanordnung (10, 20, 50) einen Luftfilterhalter (13, 23) zum Halten eines Luftfilterelements (14) mit einer Luftfilterdurchflussquerschnittsfläche in der Luftführung zum Filtern der mit dem Strom von Luft durch die Luftführung vom Lufteinlass (16, 26, 56) zum Verdampfer (17, 57) geführten Luft beinhaltet,
wobei der Strom von Luft über eine gesamte Lufteinlassquerschnittsfläche des Lufteinlasses (16, 26, 56) verteilt durch den Lufteinlass (16, 26, 56) in die Luftführung fliessen kann und wobei der Strom von Luft über die gesamte Luftfilterdurchflussquerschnittsfläche verteilt durch das Luftfilterelement (14) zum Filtern der mit dem Strom von Luft durch die Luftführung vom Lufteinlass (16, 26, 56) zum Verdampfer (17, 57) geführten Luft fliessen kann,
wobei die Luftfilterdurchflussquerschnittsfläche mindestens 1.75 mal so gross wie die Lufteinlassquerschnittsfläche ist.

2. Wärmepumpenanordnung (10, 20, 50) nach Anspruch 1, **dadurch gekennzeichnet, dass** die Luftfilterdurchflussquerschnittsfläche mindestens 2 mal, bevorzugt mindestens 2.5 mal, so gross wie die Lufteinlassquerschnittsfläche ist.

3. Wärmepumpenanordnung (10, 20, 50) nach Anspruch 1 oder 2, **dadurch gekennzeichnet, dass** die Luftführung auf ihrem gesamten Weg vom Lufteinlass (16, 26, 56) zum Luftfilterhalter (14) einen Luftführungsquerschnitt mit einer Luftführungsquerschnittsfläche aufweist, welche Luftführungsquerschnittsfläche mindestens so gross wie die Lufteinlassquerschnittsfläche ist.

4. Wärmepumpenanordnung (10, 20, 50) nach einem der Ansprüche 1 bis 3, **dadurch gekennzeichnet, dass** die Wärmepumpenanordnung (10, 20, 50) einen Ventilator (18) zum Antreiben des Stroms von Luft in der Luftführung vom Lufteinlass (16, 26, 56) zum Verdampfer (17, 57) und damit zum Zuführen von Luft als Wärmequelle zum Verdampfer (17, 57) umfasst.

5. Wärmepumpenanordnung (10, 20, 50) nach einem der Ansprüche 1 bis 4, **dadurch gekennzeichnet, dass** die Wärmepumpenanordnung (10, 20, 50) eine Tragstruktur (11,21,51) aufweist.

6. Wärmepumpenanordnung (10, 20, 50) nach einem der Ansprüche 1 bis 5, **dadurch gekennzeichnet, dass** der Luftfilterhalter (13, 23) bewegbar an der restlichen Wärmepumpenanordnung (10, 20, 50) gelagert ist,
a) wobei der Luftfilterhalter (13, 23) eine Betriebsstellung aufweist, in welcher sich der Luftfilterhalter (13, 23) in einer Position befindet, in welcher das gegebenenfalls im Luftfilterhalter (13, 23) gehaltene Luftfilterelement (14) zum Filtern der mit dem Strom von Luft durch die Luftführung vom Lufteinlass (16, 26, 56) zum Verdampfer (17, 57) geführten Luft in der Luftführung gehalten ist, sodass der Strom von Luft zum Filtern der mit dem Strom von Luft durch die Luftführung vom Lufteinlass (16, 26, 56) zum Verdampfer (17, 57) geführten Luft durch das Luftfilterelement (14) fliesst,
b) wobei der Luftfilterhalter (13, 23) eine Luftfilterelementaustauschstellung aufweist, in welcher sich der Luftfilterhalter (13, 23) in einer von ausserhalb der Wärmepumpenanordnung (10, 20, 50) zugänglichen Position zum Austauschen des Luftfilterelements (14) und damit zum Entnehmen bzw. Anbringen des Luftfilterelements (14) befindet.

7. Wärmepumpenanordnung (10, 20, 50) nach Anspruch 6, **dadurch gekennzeichnet, dass** der Luftfilterhalter (13, 23) von seiner Betriebsstellung in seine Luftfilterelementaustauschstellung ausziehbar und zurück einschiebbar oder ausschwenkbar und zurück einschwenkbar an der restlichen Wärmepumpenanordnung (10, 20, 50) gelagert ist.

8. Wärmepumpenanordnung (10, 20, 50) nach einem der Ansprüche 1 bis 7, **dadurch gekennzeichnet, dass** die Wärmepumpenanordnung (10, 20, 50) das Luftfilterelement (14) umfasst.

9. Wärmepumpenanordnung (10, 20, 50) nach einem der Ansprüche 1 bis 8, **dadurch gekennzeichnet, dass** die Luftführung einen ersten Luftführungsabschnitt aufweist, welcher vom Lufteinlass (16, 26, 56) zum Verdampfer (17, 57) reicht, und einen zweiten Luftführungsabschnitt aufweist, welcher vom Verdampfer (17, 57) zum Luftauslass (19, 59) reicht, wobei der erste Luftführungsabschnitt vom zweiten Luftführungsabschnitt separiert ist.

10. Wärmepumpenanordnung (10) einem der Ansprüche 1 bis 9, **dadurch gekennzeichnet, dass** die Wärmepumpenanordnung (10) eine Luftführungseinrichtung (15) zum Führen des Stroms von Luft vom Lufteinlass (16) zum Luftfilterhalter (13) beinhaltet, um den durch den Lufteinlass (16) in die Luftführung gelangenden Strom von Luft über die gesamte Luftfilterdurchflussquerschnittsfläche verteilt durch das im Luftfilterhalter (13) gehaltene Luftfilterelement (14) zum Filtern der mit dem Strom von Luft durch die Luftführung vom Lufteinlass (16) zum Verdampfer (17) zu leiten.

11. Wärmepumpenanordnung (10) nach Anspruch 10, **dadurch gekennzeichnet, dass** die Luftführungseinrichtung (15) aus Schaumstoff gefertigt ist.

12. Wärmepumpenanordnung (10) nach Anspruch 10 oder 11, **dadurch gekennzeichnet, dass** die Luftführungseinrichtung (15) entlang eines linearen Verstellwegs bewegbar und in verschiedenen Positionen entlang des linearen Verstellwegs feststellbar an einem von der Luftführungseinrichtung (15) verschiedenen Element der Wärmepumpenanordnung (10) gelagert ist.

13. Luftführungseinrichtung, insbesondere Luftführungskanaleinrichtung (15), für eine Wärmepumpenanordnung (10) nach einem der Ansprüche 9 bis 12.

14. Luftführungseinrichtung, insbesondere Luftführungskanaleinrichtung (15), nach Anspruch 13, **dadurch gekennzeichnet, dass** die Luftführungseinrichtung (15) aus Schaumstoff gefertigt ist.

15. Vorrichtung (1, 31, 41) zur Bereitstellung von Brauchwarmwasser, wobei die Vorrichtung (1, 31, 41) einen Warmwasserspeicher (2, 32, 52) zum Speichern des Brauchwarmwassers und eine Wärmepumpenanordnung (10, 20, 50) nach einem der Ansprüche 1 bis 12 beinhaltet.
